# EUROPEAN PATENT SPECIFICATION

(11) **EP 4 474 876 B1**
(45) Date of publication and mention of the grant of the patent: **01.07.2026**
(21) Application number: 23904805.1
(22) Date of filing: 30.10.2023
(51) Int. Cl.: G02B 6/44

(54) **PROTECTION-ENHANCED MICRO-HARNESS CABLE AND MANUFACTURING PROCESS THEREFOR**
VERSTÄRKTES MIKROVERKABELTES SCHUTZKABEL UND HERSTELLUNGSVERFAHREN DAFÜR
CÂBLE DE MICRO-FAISCEAU À PROTECTION AMÉLIORÉE ET SON PROCESSUS DE FABRICATION

(30) Priority: 19.04.2023 CN 202310416910
(43) Date of publication of application: 11.12.2024
(73) Proprietor: Jiangsu Zhongtian Technology Co., Ltd., Nantong, Jiangsu 226000 (CN)
(72) Inventor: CAI, Wei, Nantong, Jiangsu 226000 (CN); MIAO, Xiaoming, Nantong, Jiangsu 226000 (CN); ZHOU, Juan, Nantong, Jiangsu 226000 (CN); ZHU, Lingzhi, Nantong, Jiangsu 226000 (CN); QIAN, Huihui, Nantong, Jiangsu 226000 (CN); LIU, Liang, Nantong, Jiangsu 226000 (CN); MIAO, Yafu, Nantong, Jiangsu 226000 (CN); FENG, Yujie, Nantong, Jiangsu 226000 (CN)
(74) Representative: J A Kemp LLP
(86) International application number: PCT/CN2023/127929
(87) International publication number: WO 2024/216909

(56) References cited:
- CN-A- 109 116 494
- CN-A- 112 578 518
- CN-A- 113 484 964
- CN-A- 113 970 823
- CN-A- 114 706 179
- CN-A- 115 933 079
- CN-A- 115 933 079
- CN-A- 116 148 999
- CN-U- 215 067 442
- CN-U- 215 416 030
- CN-U- 215 575 839
- JP-A- 2009 053 615
- JP-A- 2020 197 655
- JP-A- S54 124 744
- KR-A- 20050 088 709

## Description

### TECHNICAL FIELD

This application relates to the field of optical cables, and specifically relates to a reinforced protection micro-bunched cable and a manufacturing process thereof.

### BACKGROUND

In recent years, the application of micro-bunched optical cable gets becoming more and more widespread. The main advantages of the micro-bunched tube within micro-bunched cable lie in easiness for stripping, small bending radius, good flexibility, and so on. However, because of its characteristic of being easy for stripping, the material of micro-bunched tube is relatively soft, which leads to compressional deformation of micro-bunched tube in the optical cable under external force. Eventually, the optical fiber is stressed and the transmission performance of the entire optical cable is affected.

In order to solve the technical problem, in existing technologies, the combination of thermoplastic reinforcing wire melting-processing fiber reinforced plastics (MFR) and loose tube is adopted, which improves the axial contractility resistance of loose tube without affecting the softness and radial shrinkage of loose tube. For example, the utility model
CN211086702U proposes an anti-contraction loose tube based on the thermoplastic reinforcing wire MFR. However, the loose tube provided by this patent has a structure of total three layers: that is, a steel mesh hard armor layer as an inner layer, a glass fiber soft armor layer as a middle layer, and a nylon sheath layer as an outer layer; and such structure guarantees the softness of the loose tube and anti-contraction properties, but the multi-layer composite structure increases the diameter of optical cable, that is not conducive to the requirements of optical cable for large number of cores, and does not have a good stripping performance of the optical cable.

CN 215 067 442 U discloses a multi-core miniature skeleton branch optical cable, which comprises a central reinforcing piece and an outer sheath, and a plurality of optical cable subunits are uniformly distributed, filled and arranged between the central reinforcing piece and the outer sheath around the central reinforcing piece; the optical cable subunit is of a miniature outer skeleton structure and comprises a miniature skeleton sheath, and the miniature skeleton sheath is filled with a plurality of micro beam tube units. And a plurality of skeleton bulges are uniformly distributed on the peripheral surface of the miniature skeleton sheath along the circumferential direction.

### SUMMARY

The present invention is set out in the appended set of claims. In order to solve the problems existing in the prior art, the present application studied the extrusion resistance of micro-bunched tubes, modifies current morphological structure of the micro-bunched tubes and provides a reinforced protection micro-bunched cable and its manufacturing process. The reinforced protection micro-bunched cable includes micro-bunched tubes, which makes an improvement of the conventional surface structure of the original micro-bunched tubes, including adding bumps to the external surface of micro-bunched tube and arranging a gap between the bumps. The thickness of the micro-bunched tube wall at the gap between the bumps is still small, which can meet the construction requirements of being easy to strip; the bump material is softer than the tube body material, and setting of bumps can effectively buffer the external force; further, the additional bumps can increase the longitudinal tensile properties of the whole tube, so that the micro-bunched tube is not easy to be broken under tension.

In a first aspect, an embodiment of the present application provides a reinforced protection micro-bunched cable that includes a plurality of micro-bunched tubes, each micro-bunched tube filled with an optical fiber and water blocking material, where an outer surface of the micro-bunched tube is uniformly arranged with bumps along a circumference of its radial section; a gap is disposed between adjacent bumps; a radius of each bump is same as a thickness of a micro-bunched tube wall; a Shore D hardness of a bump material is smaller than that of a micro-bunched tube wall material; the bumps deform after being stressed until they are depressed into the micro-bunched tube wall with increase of stress to form depressed parts; and an inner wall of the micro-bunched tube wall is extruded by the depressed parts to form small convex arcs corresponding to the depressed parts.

In some embodiments, the micro-bunched tube has a material of LSZH, TPEE, TPU or polyolefin, a density of 1.05-1.55g/cm³, a tensile strength of 12-18MPa, and an elongation at break between 120% and 550%.

In some embodiments, an optical fiber core is 1-12 in number, the micro-bunched tube wall has a thickness of 0.14±0.04mm, and the micro-bunched tube has an outer diameter between 0.95mm and 1.55mm.

In some embodiments, the bump is hemispherical or pyramidal, and the Shore D hardness of the bump material is 2-3 degrees smaller than that of the micro-bunched tube wall material.

In some embodiments, the water blocking material includes at least one of jelly and water blocking yarn; the jelly includes a liquid and a thickener; the liquid is at least one of silicone oil and fluorinated oil; the thickener is at least one of silicon dioxide, bentonite, and polytetrafluoroethylene; the water blocking yarn is cotton yarn type.

In some embodiments, the reinforced protection micro-bunched cable includes an outer sheath, a reinforced layer, a reinforcement, and a cable core, the cable core being cladded with the reinforced layer and the outer sheath successively, and the reinforcement symmetrically being embedded in an inner wall of the outer sheath; where
an outer wall of the outer sheath is circular, the inner wall of the outer sheath forms an oval inner cavity, a thickness of a short-axis wall of the outer sheath is greater than a thickness of a long-axis wall of the outer sheath, and the reinforcement is embedded in the short-axis wall of the outer sheath;
the reinforced layer fits to the inner cavity of the outer sheath to form an oval outer wall, an inner wall of the reinforced layer forms a circular inner cavity, a thickness of a long-axis wall of the reinforced layer is greater than a thickness of a short-axis wall of the reinforced layer, and addition of the thickness of the long-axis wall of the reinforced layer and the thickness of the long-axis wall of the outer sheath is equal to the sum of the thickness of the short-axis wall of the reinforced layer and the thickness of the short-axis wall of the outer sheath;
the cable core includes a plurality of micro-bunched tube units including a micro-bunched tube.

In some embodiments, a marking line is arranged at an apex of the long-axis wall of the outer sheath for marking an optimal stripping position.

In some embodiments, the long-axis wall of the reinforced layer is provided with a stripping joint corresponding to the marking line.

In some embodiments, the stripping joint provided in the long-axis wall of the reinforced layer is a gap connected by mortise and tenon, or an easy-striping window connected by a flexible material.

In a second aspect, the present application provides a manufacturing process for manufacturing the reinforced protection micro-bunched cable, including the steps of:
in an extrusion process of the micro-bunched tube, choosing a matched extrusion mold and feeding an optical fiber bundle to a head of an extrusion machine, where a feedstock for the head includes two parts: one part being the micro-bunched tube wall material, the other part being the bump material on a surface of the micro-bunched tube wall;
setting an extrusion temperature, where a body of the extrusion machine is divided into multiple body temperature zones in a direction from a feed inlet to an entrance of the extrusion mold, a temperature of the multiple body temperature zones increases successively along an extrusion direction from the feed inlet to the entrance of the extrusion mold, and a temperature of the extrusion mold is lower than a temperature of the body of the extrusion machine close to the entrance end of the extrusion mold;
extruding the micro-bunched tube wall and the bumps at the same time using a double-layer co-extrusion process, so as to obtain an integrally-formed micro-bunched tube;
cooling the integrally-formed micro-bunched tube through a cooling water tank, the cooling water tank being divided into a first cooling water tank and a second cooling water tank, where a temperature of the first cooling water tank is higher than that of the second cooling water tank, and the integrally-formed micro-bunched tube passes through the first cooling water tank and the second cooling water tank successively.

Compared with the prior art, this application can achieve the following beneficial effects.
1. In this application, bumps are disposed on the outer wall of the micro-bunched tube and there are gaps between the bumps, and the thickness of the tube wall at the gap is still small, which makes it easier to strip compared with the traditional micro-bunched tube coupled with the reinforced layer, meeting the construction requirements of being easy to tear off. At the same time, the radius of the bump is consistent with the thickness of the tube wall, thereby reducing the size of the micro-bunched cable and improving the optical fiber filling rate.
2. In this application, bumps are arranged on the outer wall of the micro-bunched tube. Compared with the prior art, the bump material is softer than the tube body material; after being subjected to external force, the bumps can effectively buffer the external force through deformation; when the extrusion deformation occurs to a certain extent, the bumps will be sunken into the tube to form depressed parts, the depressed parts extrude the inner wall of the tube and form small convex arcs corresponding to the depressed parts on the inner wall of the tube, which can increase the extrusion buffering of the optical fiber and improve the strength and lateral compression resistance of the optical cable.
3. In the micro-bunched cable of this application, the reinforcement is embedded in the short-axis wall of the outer sheath; the addition of the thickness of the long-axis wall of the reinforced layer and the thickness of the long-axis wall of the outer sheath is equal to the sum of the thickness of the short-axis wall of the reinforced layer and the thickness of the short-axis wall of the outer sheath. Compared with the prior art, the strength of the optical cable on the entire circumference is improved, avoiding the problem of the optical cable attenuation exceeding the standard due to the deformation caused by uneven strength of the optical cable when the external force is applied on the circumference.
4. In this application, a marking line is arranged at the apex of the long-axis wall of the outer sheath and the optimal stripping position is defined, which reduces the difficulty for the workers to find the cable stripping point. At the same time, the long-axis wall of the reinforced layer is provided with a stripping joint at its top end, which allows the workers to quickly strip the reinforced layer after stripping off the outer sheath, greatly improving the stripping and construction efficiency. Furthermore, the reinforced layer also acts as a barrier to prevent the cable core from being damaged by tools when the outer sheath is striped off.

In order to make the above purposes, features, and advantages of this application more obvious and understandable, the following provides preferred embodiments, and together with the attached drawings, provides a detailed explanation as follows.

### BRIEF DESCRIPTION OF DRAWINGS

In order to more clearly illustrate the technical solutions of the embodiments of the present application, the drawings, which are required to be used in the embodiments, will be briefly described below. It should be understood that the following drawings illustrate only some embodiments of the present application, and therefore should not be regarded as a limitation to the scope of the present application. To those skilled in the art, other relevant drawings can be obtained from these drawings without creative works.
FIG. 1 shows a structurally schematic diagram of a micro-bunched tube unit of a reinforced protection micro-bunched cable of the present application.
FIG. 2a shows a structurally schematic diagram of a micro-bunched tube of a micro-bunched cable of the present application.
FIG. 2b shows a schematic diagram of another structure of a micro-bunched tube of a micro-bunched cable of the present application.
FIG. 3 shows a structurally schematic diagram of a reinforced protection micro-bunched cable of the present application.
FIG. 4 shows a structurally schematic diagram of another reinforced protection micro-bunched cable of the present application.
FIG. 5 shows a flow chart of a manufacturing process of a micro-bunched tube of a reinforced protection micro-bunched cable of the present application.

In these figures: 1- optical fiber, 2- water blocking material, 3- micro-bunched tube, 4- bump, 5- reinforced layer, 6- outer sheath, 7- reinforcement, 8- marking line, 9- stripping joint, A- long-axis wall of outer sheath, B- short-axis wall of outer sheath, C- long axis-wall of reinforced layer, D- short-axis wall of reinforced layer.

### DESCRIPTION OF EMBODIMENTS

The term "comprising" in the specification, claims, and figures of this application is synonymous with "including", "containing", or "characterized by" and is inclusive of endpoints or is open-ended, and does not exclude additional elements or method steps not mentioned. "Comprising" is a technical term used in the claim language to mean that the elements are present, but that other elements may be added and still form a construction or method within the scope of the claims.

It should be noted that similar signs and letters represent similar items in the drawings below, therefore, once an item is defined in one of the drawings, it is not necessary to make further definition and interpretation on the item in subsequent drawings. Furthermore, the terms "first", "second", "third", etc., are only used for the purposes of differentiation and description and are not to be understood as indicating or implying relative importance. The technical solutions in the embodiments of the present application will be clearly and completely described below in conjunction with the drawing of the embodiments of the present application, and obviously, the described embodiments are part of the embodiments of the present application rather than all of the embodiments. Based on the embodiments in this application, all other embodiments obtained by those skilled in the art without creative labor would fall within the scope of protection of this application.

Reference to "embodiments" herein implies that particular features, structures, or characteristics described in conjunction with the embodiments may be included in at least one embodiment of the present application. The presence of such phrase at various positions in the specification does not necessarily refer to the same embodiment, nor is a separate or alternative embodiment that is mutually exclusive with other embodiments. It is understood explicitly and implicitly by those skilled in the art that embodiments described herein may be combined with other embodiments.

The invention is described in detail in combination with the drawings and specific embodiments below.

### Embodiment 1

A reinforced protection micro-bunched cable as in this Embodiment 1 includes multiple micro-bunched tubes 3, where each micro-bunched tube is filled with optical fibers 1 and water blocking materials 2. An outer surface of the micro-bunched tube 3 is arranged with bumps 4; and the Shore D hardness of the bump 4 material is 2-3 degrees smaller than that of a tube body material. The bumps 4 can deform after being stressed, and can be depressed into the micro-bunched tube wall with the increase of the stress to form depressed parts, thereby extruding the inner wall of the micro-bunched tube wall to form a small convex arc corresponding to the depressed parts.

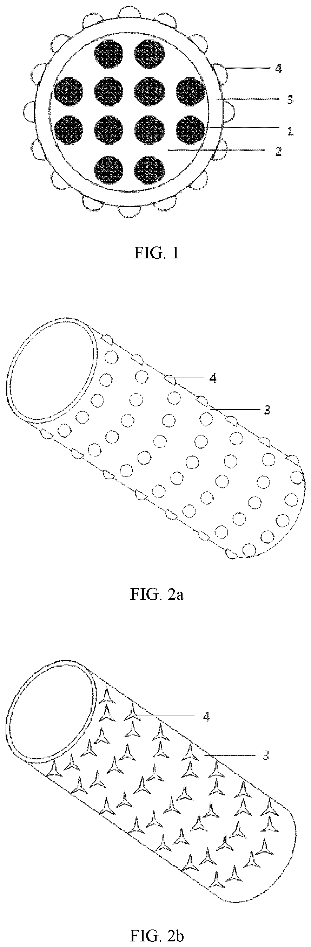

In this Embodiment 1, the structure of micro-bunched tube 3 is shown in FIG. 2a. The bumps 4 on the surface of the micro-bunched tube 3 are semicircular, and the radius of the bump is the same as the wall thickness of the micro-bunched tube 3, which is 0.14±0.04 mm, and the number of bumps is calculated to be between 33 and 34.

In some embodiments, the bumps 4 on the surface of the micro-bunched tube 3 are in a shape of pyramid, and the height of the pyramid is the same as the wall thickness of the micro-bunched tube 3, which is 0.14 ± 0.04 mm.

Unlike conventional micro-bunched tubes, the design of bumps is added to the outer surface of the micro-bunched tube. There are gaps between bumps, and the wall thickness of the micro-bunched tube at the gap is still small, which can meet the construction requirements of being easy to strip. The radius of the bump is consistent with the thickness of the tube wall, thereby reducing the size of the micro-bunched cable and improving the filling rate of optical fibers. The material of bump is softer than that of the tube body. Setting bumps can effectively buffer external force, and when the extrusion deformation of the micro-bunched tube occurs to a certain extent, the bumps deform and form depressed parts, the inner wall of the tube is extruded by the depressed parts to form small convex arcs corresponding to the depressed parts, achieving further buffering effect. Further, the additional bumps can increase the longitudinal tensile properties of the whole tube, causing the tube not to be easy to break under tension.

In this Embodiment 1, the micro-bunched tube is low smoke zero halogen (LSZH), thermoplastic polyester-ether elastomer (TPEE), thermoplastic polyurethanes (TPU), or polyolefin material, and has a density of 1.05-1.55g/cm³, a tensile strength of 12-18MPa, and an elongation at break of 120%-550%. Therefore, the micro-bunched tubes have high flexibility and tensile strength, as well as good fire resistance when the LSZH material is used.

In this Embodiment 1, there are 12 optical fibers in each micro-bunched tube, and the colors of optical fiber are blue, orange, green, brown, gray, white, red, black, yellow, and purple. The optical fiber uses G.657A2 optical fiber, and the diameter of the optical fiber coating after the optical fiber is colored is 245µm±15µm. The optical fibers in the micro-bunched tube are in a twisted state, and are S-twisted. The bending radius of the optical fiber is 7.5mm, and the outer diameter of the 12-core micro-bunched tube is generally 1.5±0.05mm.

Taking the optical fiber size of 245µm as an example, in some embodiments, each micro-bunched tube 3 is provided with one optical fiber therein, and the outer diameter of micro-bunched tube 3 is 1.0±0.05mm. In some embodiments, each micro-bunched tube 3 is provided with 4 optical fibers therein, and the outer diameter of the micro-bunched tube 3 is 1.2±0.05mm. In some embodiments, each micro-bunched tube 3 is provided with 6 optical fibers therein, and the outer diameter of the micro-bunched tube 3 is 1.3±0.05mm.

In this Embodiment 1, the micro-bunched tube is filled with a water blocking material. The water blocking material is any one of a jelly or a water blocking yarn. The jelly includes a liquid and a thickener; the liquid is at least one of silicone oil or fluorinated oil; the thickener is at least one of silicon dioxide, bentonite, or polytetrafluoroethylene; and the water blocking yarn is cotton yarn type. Different water blocking ways are adopted to meet the two requirements of dry water blocking and oil-filling water blocking.

### Embodiment 2

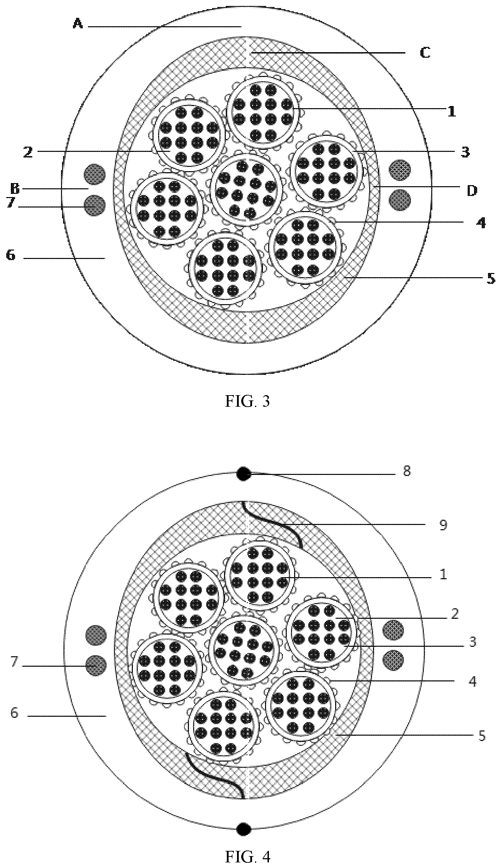

A micro-bunched cable as in this Embodiment 2 includes an outer sheath 6, a reinforced layer 5, and micro-bunched tube units disposed once from outside to inside; 4 symmetrical reinforcements 7 are embedded in the outer sheath 6, as shown in FIG. 3. The micro-bunched tube unit includes micro-bunched tubes 3, water blocking material 2, and optical fibers 1, the optical fibers 1 being S-twisted within the micro-bunched tubes 3. The micro-bunched tube has the same structure as the "micro-bunched tube" described in Embodiment 1, and the outer wall of the micro-bunched tube is configured with bumps mutually spaced apart to improve the compressive property and tensile strength of the micro-bunched cable, while ensuring that the micro-bunched cable is easy to peel off.

In this Embodiment 2, the outer sheath 6 has a circular periphery, its inner wall forms an oval inner cavity, the thickness of a short-axis wall B of the outer sheath is greater than the thickness of a long-axis wall A of the outer sheath, and the reinforcements 7 are embedded in an inner wall of the short axis of the outer sheath. The reinforced layer 5 fits to an inner cavity of the outer sheath 6 to form an oval outer periphery, and the inner wall forms a circular inner cavity. The thickness of the long-axis wall C of the reinforced layer is greater than the thickness of the short-axis wall D of the reinforced layer, and the addition of the thickness of the long-axis wall C of the reinforced layer and the thickness of the long-axis wall A of the outer sheath is equal to the sum of the thickness of the short-axis wall D of the reinforced layer and the thickness of the short-axis wall B of the outer sheath. Therefore, the thickness of the long-axis wall C of the reinforced layer enhances the strength of the optical cable in the direction of the long axis of the outer sheath 6, so that the optical cable has a more uniform compressive strength around the circumference, avoiding the problem of the optical cable attenuation exceeding the standard due to the deformation caused by uneven strength of the optical cable when the external force is applied on the circumference.

In this Embodiment 2, the reinforced layer 5 may be made of materials such as aramid yarn and fiberglass, and the reinforcement 7 is a rigid material, preferably fiber Reinforced Polymer (FRP). The setting of reinforced layers and the reinforcements can effectively improve the tensile properties and resistance to local pressure of micro-bunched cables, so as to improve protection performance of optical fiber.

The optical cable needs to meet the requirements of full section water blocking, and both the micro-bunched tube and the whole cable core have extremely high water blocking requirements. In this embodiment, the micro-bunched tube is filled with water blocking material to meet the requirements of full section water resistance, and the water blocking material includes at least one of the fiber jelly or water blocking powder. The micro-bunched tube can adopt different water blocking ways to meet the requirements of dry water blocking and oil-filling water blocking.

### Embodiment 3

The structure of reinforced protection micro-bunched cable in this embodiment differs from that of Embodiment 2 in that a stripping structure is provided for the outer sheath 6 and the reinforced layer 5.

Specifically, as shown in Figure 4, a marking line is embedded at the apex of the long-axis wall A of the outer sheath, which is equivalent to defining the optimum stripping position on the optical cable surface by the marking line, thereby reducing the difficulty for the workers to find the optical cable stripping point, and improving the accuracy of determining the optical cable stripping point by the workers.

In this Embodiment 3, a stripping joint 9 is provided at the long-axis wall C of the reinforced layer, and a press-fit riveting of the reinforced layer is formed at the stripping joint 9. The joint may be a gap or may be bonded by soft materials, which allows the workers to quickly peel off the reinforced layer after peeling off the outer sheath, greatly improving the stripping efficiency. Furthermore, the reinforced layer 5 also acts as a barrier to avoid damage to the cable core caused by tools when the outer sheath is stripped.

### Embodiment 4

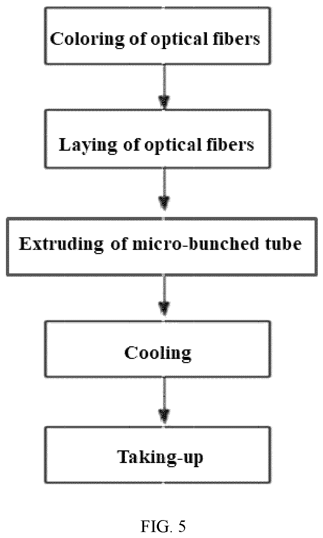

As shown in a process for manufacturing a micro-bunched cable according to this Embodiment 4, the manufacturing steps are shown in Figure 5:
step 1, coloring of optical fibers, where a coloring machine is used to color the optical fiber;
step 2, laying of optical fibers, where the tension of the laying of optical fibers is set to 0.8-1.2N;
step 3, extruding, where a suitable extrusion mold is selected, optical fiber bundles are fed into the head of an extrusion machine, and the feedstock for head is divided into two parts: one part being the tube body material, and the other part being the bump material on the surface.

Setting an extrusion temperature: the body of the extrusion machine is divided into multiple machine body temperature zones in a direction from a feed inlet to an entrance of the extrusion mold, and the temperatures of the body temperature zones increase successively along an extrusion direction from the feed inlet to the entrance of the extrusion mold. For example, as for an extrusion machine with 4-6 machine body temperature zones, the body temperature of the extrusion machine is set between 170°C and 190°C, where the first and second machine bodies are set at a relatively low temperature according to the characteristics of the extruded material, which are set at 170°C; to avoid scorching material caused by too high temperature, the third and fourth machine bodies are set at 180°C, and the fifth and sixth machine bodies are set at a relatively slightly higher temperature of 190°C, thus ensuring that the material has been sufficiently melted before it enters the mouth of the mold.

The temperature at the extrusion mold is lower than that of the body of the extrusion machine close to the entrance end of the extrusion mold, and the extrusion temperature at the extrusion mold is set at 180°C according to the characteristics of the micro-bunched tube material.

A double-layer co-extrusion process is used to extrude the micro-bunched tube wall and the bumps at the same time, so as to form the micro-bunched tube with bumps uniformly arranged along the circumferential direction of the radial section.

Step 4, an extruded micro-bunched tube is cooled through a cooling tank, the cooling tank being divided into a first cooling water tank and a second cooling water tank, where a temperature of the first cooling water tank is higher than that of the second cooling water tank, and the integrally-formed micro-bunched tube passes through the first cooling water tank and the second cooling water tank successively. Preferably, the water temperature of the first cooling water tank is set to 40-50°C, and the water temperature of the second cooling water tank is set to 20-30°C. The first cooling water tank uses a warm water tank, ensuring that the molecules in the micro-bunched tube material are fully crystallized to reduce the retraction of the micro-bunched tube, and the second cooling water tank uses normal temperature water for cooling.

Step 5, taking-up, where the taking-up tension is set to 2-2.5N. In this embodiment, the micro-bunched tube is relatively small and the main element for bearing tension is optical fiber, so the set taking-up tension should not be too large, setting it to 2-2.5N can ensure that the micro-bunched tube does not be ruptured, while making the micro-bunched tube straightening the take-up to the taking-up reel.

The above embodiments of this application are introduced in detail. Specific embodiments are applied to explain the principle and implementations of this application. The description of above embodiments are only used to aid in understanding the method and core ideas of this application; meanwhile, for those skilled in the art, according to the ideas of this application, there will be changes in the specific implementation and scope of application. In summary, the content of this specification should not be understood as a limitation of this application.

## Claims

1. A reinforced protection micro-bunched cable, comprising a plurality of micro-bunched tubes (3), wherein each micro-bunched tube (3) is filled with an optical fiber (1);
wherein an outer surface of the micro-bunched tube (3) is uniformly arranged with bumps (4) along a circumference of its radial section; wherein a gap is disposed between adjacent bumps (4); **characterized in that** each micro-bunched tube (3) is filled with water blocking material (2);
a radius of each bump (4) is the same as a thickness of a micro-bunched tube (3) wall; a Shore D hardness of a bump (4) material is smaller than that of a micro-bunched tube (3) wall material; the bumps (4) deform after being stressed until they are depressed into the micro-bunched tube (3) wall with increase of stress to form depressed parts; and an inner wall of the micro-bunched tube (3) wall is extruded by the depressed parts to form small convex arcs corresponding to the depressed parts.

2. The reinforced protection micro-bunched cable according to claim 1, wherein the micro-bunched tube (3) has a material of LSZH, TPEE, TPU or polyolefin, a density of 1.05-1.55g/cm³, a tensile strength of 12-18MPa, and an elongation at break between 120% and 550%.

3. The reinforced protection micro-bunched cable according to claim 1, wherein an optical fiber (1) core is 1-12 in number, the micro-bunched tube (3) wall has a thickness of 0.14±0.04mm, and the micro-bunched tube (3) has an outer diameter between 0.95mm and 1.55mm.

4. The reinforced protection micro-bunched cable according to claim 1, wherein the bump (4) is hemispherical or pyramidal, and the Shore D hardness of the bump (4) material is 2-3 degrees smaller than that of the micro-bunched tube (3) wall material.

5. The reinforced protection micro-bunched cable according to claim 1, wherein the water blocking material (2) comprises at least one of jelly and water blocking yarn; the jelly comprises a liquid and a thickener; the liquid is at least one of silicone oil and fluorinated oil; the thickener is at least one of silicon dioxide, bentonite, and polytetrafluoroethylene; the water blocking yarn is cotton yarn type.

6. The reinforced protection micro-bunched cable according to claim 1, comprising an outer sheath (6), a reinforced layer (5), a reinforcement (7), and a cable core, the cable core cladded with the reinforced layer (5) and the outer sheath successively, and the reinforcement (7) symmetrically embedded in an inner wall of the outer sheath; wherein
an outer wall of the outer sheath (6) is circular, the inner wall of the outer sheath (6) forms an oval inner cavity, a thickness of a short-axis wall (B) of the outer sheath is greater than a thickness of a long-axis wall (A) of the outer sheath, and the reinforcement (7) is embedded in the short-axis wall (B) of the outer sheath;
the reinforced layer (5) fits to the inner cavity of the outer sheath (6) to form an oval outer wall, an inner wall of the reinforced layer (5) forms a circular inner cavity, a thickness of a long-axis wall (C) of the reinforced layer is greater than a thickness of a short-axis wall (D) of the reinforced layer, and addition of the thickness of the long-axis wall (C) of the reinforced layer and the thickness of the long-axis wall (A) of the outer sheath is equal to the sum of the thickness of the short-axis wall (D) of the reinforced layer and the thickness of the short-axis wall (B) of the outer sheath;
the cable core comprises a plurality of micro-bunched tube (3) units comprising the micro-bunched tube (3).

7. The reinforced protection micro-bunched cable according to claim 6, wherein a marking line (8) is arranged at an apex of the long-axis wall (A) of the outer sheath for marking an optimal stripping position.

8. The reinforced protection micro-bunched cable according to claim 7, wherein the long-axis wall (C) of the reinforced layer is provided with a stripping joint (9) corresponding to the marking line (8).

9. The reinforced protection micro-bunched cable according to claim 8, wherein the stripping joint (9) provided in the long-axis wall (C) of the reinforced layer is a gap connected by mortise and tenon, or an easy-striping window connected by a flexible material.

10. A manufacturing process for manufacturing the reinforced protection micro-bunched cable according to any one of claims 1-9, comprising the steps of:
in an extrusion process of the micro-bunched tube, choosing a matched extrusion mold and feeding an optical fiber bundle to a head of an extrusion machine, wherein a feedstock for the head comprises two parts: one part being the micro-bunched tube wall material, the other part being the bump material on a surface of the micro-bunched tube wall;
setting an extrusion temperature, wherein a body of the extrusion machine is divided into multiple body temperature zones in a direction from a feed inlet to an entrance of the extrusion mold, a temperature of the multiple body temperature zones increases successively along an extrusion direction from the feed inlet to the entrance of the extrusion mold, and a temperature of the extrusion mold is lower than a temperature of the body of the extrusion machine close to the entrance end of the extrusion mold;
extruding the micro-bunched tube wall and the bumps at the same time using a double-layer co-extrusion process, so as to obtain an integrally-formed micro-bunched tube;
cooling the integrally-formed micro-bunched tube through a cooling water tank, the cooling water tank being divided into a first cooling water tank and a second cooling water tank, wherein a temperature of the first cooling water tank is higher than that of the second cooling water tank, and the integrally-formed micro-bunched tube passes through the first cooling water tank and the second cooling water tank successively.

11. The manufacturing process for manufacturing the reinforced protection micro-bunched cable according to claim 10, wherein a body temperature of the extrusion machine is set between 170°C and 190°C.

12. The manufacturing process for manufacturing the reinforced protection micro-bunched cable according to claim 10, wherein a water temperature of the first cooling water tank is set to 40-50°C, and the water temperature of the second cooling water tank is set to 20-30°C.

## Patentansprüche

1. Verstärktes Mikrobündel-Schutzkabel, umfassend eine Vielzahl von Mikrobündelröhrchen (3), wobei jedes Mikrobündelröhrchen (3) mit einer optischen Faser (1) gefüllt ist;
wobei eine Außenfläche des Mikrobündelröhrchens (3) entlang des Umfangs seines Radialschnitts gleichmäßig mit Noppen (4) vorgesehen ist; wobei zwischen benachbarten Noppen (4) ein Spalt angeordnet ist; **dadurch gekennzeichnet, dass** jedes Mikrobündelröhrchen (3) mit wasserblockierendem Material (2) gefüllt ist;
wobei der Radius jeder Noppe (4) der Wandstärke eines Mikrobündelröhrchens (3) entspricht; die Shore-D-Härte des Materials der Noppe (4) geringer ist als die des Wandmaterials des Mikrobündelröhrchens (3); sich die Noppen (4) nach Belastung verformen, bis sie mit zunehmender Belastung in die Wand des Mikrobündelröhrchens (3) eingedrückt werden, um eingedrückte Bereiche zu bilden; und eine Innenwand der Wand des Mikrobündelröhrchens (3) durch die eingedrückten Bereiche extrudiert wird, um kleine konvexe Bögen zu bilden, die den eingedrückten Bereichen entsprechen.

2. Verstärktes Mikrobündel-Schutzkabel nach Anspruch 1, wobei das Mikrobündelröhrchen (3) ein Material aus LSZH, TPEE, TPU oder Polyolefin, eine Dichte von 1,05-1,55 g/cm³, eine Zugfestigkeit von 12-18 MPa und eine Bruchdehnung zwischen 120 % und 550 % aufweist.

3. Verstärktes Mikrobündel-Schutzkabel nach Anspruch 1, wobei die Anzahl der Kerne der Lichtwellenleiter (1) 1 bis 12 beträgt, die Wand des Mikrobündelröhrchens (3) eine Stärke von 0,14 ± 0,04 mm aufweist und das Mikrobündelröhrchen (3) einen Außendurchmesser zwischen 0,95 mm und 1,55 mm aufweist.

4. Verstärktes Mikrobündel-Schutzkabel nach Anspruch 1, wobei die Noppe (4) halbkugelförmig oder pyramidenförmig ist und die Shore-D-Härte des Materials der Noppe (4) um 2 bis 3 Grad geringer ist als die des Wandmaterials des Mikrobündelröhrchens (3).

5. Verstärktes Mikrobündel-Schutzkabel nach Anspruch 1, wobei das wasserblockierende Material (2) mindestens eines von Gelee und wasserblockierendem Garn umfasst; das Gelee eine Flüssigkeit und ein Verdickungsmittel umfasst; die Flüssigkeit mindestens eines von Silikonöl und fluoriertem Öl ist; das Verdickungsmittel mindestens eines von Siliziumdioxid, Bentonit und Polytetrafluorethylen ist; das wasserblockierende Garn vom Baumwollgarntyp ist.

6. Verstärktes Mikrobündel-Schutzkabel nach Anspruch 1, umfassend einen Außenmantel (6), eine Verstärkungsschicht (5), eine Verstärkung (7) und einen Kabelkern, wobei der Kabelkern nacheinander mit der Verstärkungsschicht (5) und dem Außenmantel ummantelt ist und die Verstärkung (7) symmetrisch in eine Innenwand des Außenmantels eingebettet ist; wobei
eine Außenwand des Außenmantels (6) kreisförmig ist, die Innenwand des Außenmantels (6) einen ovalen Innenhohlraum bildet, die Stärke einer Wand (B) der kurzen Achse des Außenmantels größer ist als die Stärke einer Wand (A) der langen Achse des Außenmantels, und die Verstärkung (7) in die Wand (B) der kurzen Achse des Außenmantels eingebettet ist;
die Verstärkungsschicht (5) in den Innenhohlraum des Außenmantels (6) passt, um eine ovale Außenwand zu bilden, eine Innenwand der Verstärkungsschicht (5) einen kreisförmigen Innenhohlraum bildet, eine Stärke einer Wand (C) der langen Achse der Verstärkungsschicht größer ist als eine Stärke einer Wand (D) der kurzen Achse der Verstärkungsschicht, und die Summe der Stärke der Wand (C) der langen Achse der Verstärkungsschicht und der Stärke der Wand (A) der langen Achse des Außenmantels der Summe der Stärke der Wand (D) der kurzen Achse der Verstärkungsschicht und der Stärke der Wand (B) der kurzen Achse des Außenmantels entspricht;
der Kabelkern eine Vielzahl von Einheiten des Mikrobündelröhrchens (3) umfasst, die das Mikrobündelröhrchen (3) umfassen.

7. Verstärktes Mikrobündel-Schutzkabel nach Anspruch 6, wobei eine Markierungslinie (8) an einer Spitze der Wand (A) der langen Achse des Außenmantels vorgesehen ist, um eine optimale Abisolierposition zu markieren.

8. Verstärktes Mikrobündel-Schutzkabel nach Anspruch 7, wobei die Wand (C) der langen Achse der Verstärkungsschicht mit einer der Markierungslinie (8) entsprechenden Abisoliernaht (9) bereitgestellt ist.

9. Verstärktes Mikrobündel-Schutzkabel nach Anspruch 8, wobei die in der Wand (C) der langen Achse der Verstärkungsschicht bereitgestellte Abisoliernaht (9) ein Spalt ist, der durch Schlitz und Zapfen verbunden ist, oder ein leicht abzuisolierendes Fenster, das durch ein flexibles Material verbunden ist.

10. Herstellungsverfahren zur Herstellung des verstärkten Mikrobündel-Schutzkabels nach einem der Ansprüche 1 bis 9, umfassend die folgenden Schritte:
in einem Extrusionsverfahren des Mikrobündelröhrchens, Auswählen einer passenden Extrusionsform und Zuführen eines optischen Faserbündels zu einem Kopf einer Extrusionsmaschine, wobei ein Zuführmaterial für den Kopf zwei Teile umfasst: ein Teil ist das Wandmaterial des Mikrobündelröhrchens und der andere Teil ist das Noppenmaterial auf einer Oberfläche der Wand des Mikrobündelröhrchens;
Einstellen einer Extrusionstemperatur, wobei ein Gehäuse der Extrusionsmaschine in mehrere Gehäusetemperaturzonen in einer Richtung von einem Zufuhreinlass zu einem Eingang der Extrusionsform unterteilt ist, wobei die Temperatur der mehreren Gehäusetemperaturzonen allmählich entlang einer Extrusionsrichtung vom Zufuhreinlass zum Eingang der Extrusionsform ansteigt und die Temperatur der Extrusionsform niedriger ist als die Temperatur des Extrusionsmaschinenkörpers nahe dem Eingangsende der Extrusionsform;
gleichzeitiges Extrudieren der Wand des Mikrobündelröhrchens und der Noppen unter Verwendung eines zweischichtigen Koextrusionsverfahrens, um ein einstückig gebildetes Mikrobündelröhrchen zu erhalten;
Abkühlen des einstückig gebildeten Mikrobündelröhrchens durch einen Kühlwassertank, wobei der Kühlwassertank in einen ersten Kühlwassertank und einen zweiten Kühlwassertank unterteilt ist, wobei die Temperatur des ersten Kühlwassertanks höher ist als die des zweiten Kühlwassertanks und das einstückig gebildete Mikrobündelröhrchen nacheinander den ersten Kühlwassertank und den zweiten Kühlwassertank durchläuft.

11. Herstellungsverfahren zur Herstellung des verstärkten Mikrobündel-Schutzkabels nach Anspruch 10, wobei die Körpertemperatur der Extrusionsmaschine auf einen Wert zwischen 170 °C und 190 °C eingestellt wird.

12. Herstellungsverfahren zur Herstellung des verstärkten Mikrobündel-Schutzkabels nach Anspruch 10, wobei die Wassertemperatur des ersten Kühlwassertanks auf 40-50 °C eingestellt wird und die Wassertemperatur des zweiten Kühlwassertanks auf 20-30 °C eingestellt wird.

## Revendications

1. Câble à micro-faisceaux à protection renforcée, comprenant une pluralité de tubes à micro-faisceaux (3), chaque tube à micro-faisceaux (3) étant rempli d'une fibre optique (1),
la surface extérieure du tube à micro-faisceaux (3) étant pourvue de protubérances (4) agencées uniformément le long de la circonférence de sa section radiale, un espace étant prévu entre les protubérances (4) adjacentes ;
**caractérisé en ce que** chaque tube à micro-faisceaux (3) est rempli d'un matériau imperméable à l'eau (2), le rayon de chaque protubérance (4) est égal à l'épaisseur de la paroi d'un tube à micro-faisceaux (3) ; la dureté Shore D du matériau des protubérances (4) est inférieure à celle du matériau de paroi des tubes à micro-faisceaux (3) ; les protubérances (4) se déforment sous l'effet d'une contrainte jusqu'à s'enfoncer dans la paroi du tube à micro-faisceaux (3) à mesure que la contrainte augmente, formant ainsi des parties enfoncées ; et une paroi intérieure de la paroi du tube à micro-faisceaux (3) est extrudée par les parties enfoncées afin de former de petits arcs convexes correspondant aux parties enfoncées.

2. Câble à micro-faisceaux à protection renforcée selon la revendication 1, dans lequel le tube à micro-faisceaux (3) est constitué d'un matériau de type LSZH, TPEE, TPU ou polyoléfine, présente une densité de 1,05 à 1,55 g/cm³, une résistance à la traction de 12 à 18 MPa et un allongement à la rupture compris entre 120 % et 550 %.

3. Câble à micro-faisceaux à protection renforcée selon la revendication 1, dans lequel le nombre de cœurs de fibre optique (1) est de 1 à 12, la paroi du tube à micro-faisceaux (3) a une épaisseur de 0,14 ± 0,04 mm, et le tube à micro-faisceaux (3) a un diamètre extérieur de 0,95 mm à 1,55 mm.

4. Câble à micro-faisceaux à protection renforcée selon la revendication 1, dans lequel la protubérance (4) est hémisphérique ou pyramidale, et la dureté Shore D du matériau de la protubérance (4) est inférieure de 2 à 3 degrés à celle du matériau de paroi du tube à micro-faisceaux (3).

5. Câble à micro-faisceaux à protection renforcée selon la revendication 1, dans lequel le matériau imperméable à l'eau (2) comprend au moins un matériau parmi un gel et un fil imperméable à l'eau ; le gel comprend un liquide et un épaississant ; le liquide est au moins un matériau parmi une huile de silicone et une huile fluorée ; l'épaississant est au moins un matériau parmi le dioxyde de silicium, la bentonite et le polytétrafluoroéthylène ; le fil imperméable à l'eau est de type fil de coton.

6. Câble à micro-faisceaux à protection renforcée selon la revendication 1, comprenant une gaine extérieure (6), une couche renforcée (5), un renfort (7) et un cœur de câble, le cœur de câble étant revêtu successivement de la couche renforcée (5) et de la gaine extérieure, et le renfort (7) étant encastré symétriquement dans une paroi intérieure de la gaine extérieure, sachant que
la paroi extérieure de la gaine extérieure (6) est circulaire, la paroi intérieure de la gaine extérieure (6) forme une cavité intérieure ovale, l'épaisseur d'une paroi d'axe court (B) de la gaine extérieure est supérieure à l'épaisseur d'une paroi d'axe long (A) de la gaine extérieure, et le renfort (7) est encastré dans la paroi d'axe court (B) de la gaine extérieure,
la couche renforcée (5) s'adapte à la cavité intérieure de la gaine extérieure (6) pour former une paroi extérieure ovale, une paroi intérieure de la couche renforcée (5) forme une cavité intérieure circulaire, l'épaisseur d'une paroi d'axe long (C) de la couche renforcée est supérieure à l'épaisseur d'une paroi d'axe court (D) de la couche renforcée, et l'addition de l'épaisseur de la paroi d'axe long (C) de la couche renforcée et de l'épaisseur de la paroi d'axe long (A) de la gaine extérieure est égale à la somme de l'épaisseur de la paroi d'axe court (D) de la couche renforcée et de l'épaisseur de la paroi d'axe court (B) de la gaine extérieure,
le cœur de câble comprend une pluralité de tubes à micro-faisceaux (3) unitaires comprenant ledit tube à micro-faisceaux (3).

7. Câble à micro-faisceaux à protection renforcée selon la revendication 6, dans lequel une ligne de repérage (8) est agencée à un sommet de la paroi d'axe long (A) de la gaine extérieure pour marquer une position de dénudage optimale.

8. Câble à micro-faisceaux à protection renforcée selon la revendication 7, dans lequel la paroi d'axe long (C) de la couche renforcée est pourvue d'un joint de dénudage (9) correspondant à la ligne de repérage (8).

9. Câble à micro-faisceaux à protection renforcée selon la revendication 8, dans lequel le joint de dénudage (9) prévu dans la paroi d'axe long (C) de la couche renforcée est un espace relié par un assemblage à tenon et mortaise, ou une fenêtre de dénudage facile reliée par un matériau flexible.

10. Procédé de fabrication du câble à micro-faisceaux à protection renforcée selon l'une quelconque des revendications 1 à 9, comprenant les étapes consistant à :
lors d'un processus d'extrusion du tube à micro-faisceaux, choisir un moule d'extrusion adapté et alimenter en faisceau de fibres optiques la tête d'une machine d'extrusion, la matière première destinée à la tête comprenant deux parties : une partie constituant le matériau de paroi du tube à micro-faisceaux, l'autre partie constituant le matériau des protubérances présentes sur une surface de la paroi du tube à micro-faisceaux,
régler la température d'extrusion, le corps de la machine d'extrusion étant divisé en de multiples zones de température dans une direction allant de l'entrée d'alimentation à l'entrée du moule d'extrusion, la température des multiples zones de température augmentant successivement le long d'une direction d'extrusion allant de l'entrée d'alimentation à l'entrée du moule d'extrusion, et la température du moule d'extrusion étant inférieure à la température du corps de la machine d'extrusion à proximité de l'extrémité d'entrée du moule d'extrusion,
extruder simultanément la paroi du tube à micro-faisceaux et les protubérances au moyen d'un processus de coextrusion à double couche, de façon à obtenir un tube à micro-faisceaux formé d'un seul tenant,
refroidir le tube à micro-faisceaux formé d'un seul tenant en le faisant passer par un réservoir d'eau de refroidissement, le réservoir d'eau de refroidissement étant divisé en un premier réservoir d'eau de refroidissement et un deuxième réservoir d'eau de refroidissement, la température du premier réservoir d'eau de refroidissement étant supérieure à celle du deuxième réservoir d'eau de refroidissement, et le tube à micro-faisceaux formé d'un seul tenant traversant successivement le premier réservoir d'eau de refroidissement et le deuxième réservoir d'eau de refroidissement.

11. Processus de fabrication du câble à micro-faisceaux à protection renforcée selon la revendication 10, dans lequel la température du corps de la machine d'extrusion est réglée entre 170 °C et 190 °C.

12. Processus de fabrication du câble à micro-faisceaux à protection renforcée selon la revendication 10, dans lequel la température de l'eau du premier réservoir d'eau de refroidissement réglée est de 40 à 50 °C, et la température de l'eau du deuxième réservoir d'eau de refroidissement réglée est de 20 à 30 °C.
